# EUROPÄISCHE PATENTANMELDUNG

(11) **EP 3 489 176 A1**
(43) Veröffentlichungstag der Anmeldung: **29.05.2019**
(21) Anmeldenummer: 18199064.9
(22) Anmeldetag: 08.10.2018
(51) Int. Cl.: B65G 69/28

(54) **SYSTEM ZUR ÜBERWACHUNG UND STEUERUNG VON ANDOCK- UND ABDOCK-VORGÄNGEN EINES LKWS AN EINER VERLADERAMPE**

(30) Priorität: 19.10.2017 DE 102017124406
(71) Anmelder: Catac Capital GmbH, 5081 Anif (AT)
(72) Erfinder: MARSHALL, Michael, 5081 Anif (AT)
(74) Vertreter: Rothkopf, Ferdinand

(57) **Zusammenfassung**

Die Erfindung betrifft ein System zur Überwachung und Steuerung von Andock- und Abdock-Vorgängen zwischen einer Verladestation und einem autonom oder teilautonom fahrenden LKW. Der Verladestation (20) ist eine erste Steuervorrichtung (22) zugeordnet, mit der ein Zugangstor (26) und eine Laderampe (28) der Verladestation gesteuert wird. An Bord des LKWs ist eine zweite Steuervorrichtung (32) angeordnet, mit welcher ein Fahrantrieb, ein Zugangstor und eine Wegfahrsperre des LKWs gesteuert wird. Den Steuervorrichtungen ist jeweils eine Kommunikationseinrichtung (24, 34) zugeordnet, welche drahtlos miteinander durch Senden und Empfangen von Freigabesignalen kommunizieren.

## Beschreibung

### Hintergrund der Erfindung

Die Erfindung betrifft ein System zur Überwachung und Steuerung von Andock- und Abdock-Vorgängen zwischen einer Verladestation und einem autonom oder teilautonom fahrenden Lastkraftwagen, im Folgenden LKW genannt.

Laderampen sind Hilfsmittel um ein Be- und Entladen von Nutzfahrzeugen, insbesondere von LKWs, zu ermöglichen. Die Laderampen, welche auch als Überladebrücken bezeichnet werden, stellen in der Regel eine Verbindung von einer Ladefläche eines LKWs zu einer Lagerfläche bzw. Ladefläche eines Gebäudes oder dergleichen her. Mittels der Laderampe wird dabei ein Abstand zwischen der Ladefläche des LKWs und der Ladefläche des Gebäudes überbrückt. Mittels Laderampen wird ein unterschiedliches Höhenniveau der Ladeflächen der Gebäude und der Ladeflächen der LKWs ausgeglichen. Die Laderampen dienen dann insbesondere dazu, dass vom Gebäude aus z. B. mittels eines Hubwagens oder eines Gabelstaplers auf die Ladefläche des LKWs gefahren werden und dieser derart Beladen oder Entladen werden kann.

Bei diesem Beladen oder Entladen des LKWs stellt ein unbeabsichtigtes Wegrollen oder zu frühes Wegfahren des LKWs ein Unfallrisiko dar, weil dabei insbesondere ein Hubwagen oder Gabelstapler samt dessen Bediener von der Laderampe stürzen könnte.

Neben solchen Lücken in der Sicherheitskette des Frachtvorgangs soll ferner verhindert werden, dass eine Lücke in einer Hygienekette, z.B. einer Kühlkette entstehen kann.

### Zugrundeliegende Aufgabe

Der Erfindung liegt die Aufgabe zugrunde, ein System bereitzustellen, mit dem die Sicherheitskette und die Hygienekette beim Beladen und Entladen von autonom oder teilautonom fahrenden LKWs an einer Verladestation mit Laderampe sichergestellt ist.

### Erfindungsgemäße Lösung

Erfindungsgemäß wird ein System zur Überwachung und Steuerung von Andock- und Abdock-Vorgängen zwischen einer Verladestation und einem LKW zur Verfügung gestellt. Der Verladestation ist eine Steuervorrichtung, im Folgenden auch erste Steuervorrichtung genannt, zugeordnet, mit der mindestens ein Zugangstor der Verladestation, im Folgenden auch erstes Zugangstor genannt, und mindestens eine Laderampe der Verladestation gesteuert werden. An Bord des LKWs ist eine Steuervorrichtung, im Folgenden auch zweite Steuervorrichtung genannt, angeordnet, mit welcher ein Fahrbetrieb bzw. eine Fahrsteuerung des LKWs, ein zu einem Laderaum des LKWs führendes Zugangstor, im Folgenden auch zweites Zugangstor genannt, und eine im LKW angeordnete Wegfahrsperre gesteuert werden. Der Steuervorrichtung der Verladestation ist eine Kommunikationseinrichtung, im Folgenden auch erste Kommunikationseinrichtung genannt, zugeordnet, welche drahtlos mit einer der Steuervorrichtung des LKWs zugeordneten Kommunikationseinrichtung, im Folgenden auch zweite Kommunikationseinrichtung, kommuniziert. Die beiden Kommunikationseinrichtungen sind dazu eingerichtet, Freigabesignale für das Andocken und Abdocken des LKWs zu senden und zu empfangen.

Ein Vorteil dieser Erfindung ist, dass die beiden Steuerungsvorrichtungen des Systems bidirektional miteinander kommunizieren und sich dabei gegenseitig absichern bzw. rückversichern können. Auf diese Weise kann sichergestellt werden, dass sämtliche am Andock- oder Abdock-Vorgang beteiligte Baueinheiten, seien sie so wie das zugehörige Gebäude mit dessen Verladestation ortsfest oder so wie der zugehörige LKW beweglich, aufeinander abgestimmt agieren. Dabei kann insbesondere das zeitgerechte Öffnen und Schließen des Zugangstors des LKWs, des Zugangstors der Verladestation und der Laderampe der Verladestation sichergestellt werden. Damit kann zugleich verhindert werden, dass Lücken in der Sicherheitskette oder der Hygienekette entstehen könnten.

Vorzugsweise ist die zweite Steuervorrichtung dazu eingerichtet, die Wegfahrsperre zu aktivieren, das Zugangstor des LKWs zu öffnen, und die zweite Kommunikationseinrichtung zum Senden eines Andock-Freigabesignals zum Bestätigen einer Andock-Stellung des LKWs an die erste Kommunikationseinrichtung zu veranlassen, wenn der LKW die Andock-Stellung erreicht hat.

Entsprechend ist in einer weiteren Ausführungsform die erste Steuervorrichtung dazu eingerichtet, die Laderampe in eine auf dem LKW aufliegende Andock-Stellung zu bringen und das Zugangstor der Verladestation zu öffnen, sobald die erste Kommunikationseinrichtung das Andock-Freigabesignal zum Bestätigen der Andock-Stellung des LKWs von der zweiten Kommunikationseinrichtung empfangen hat. Durch die Übertragung des Andock-Freigabesignals von dem LKW an die Verladestation kann derart insbesondere eine Lücke in der Hygenekette durch vorzeitiges Öffnen des Zugangstors der Verladestation verhindert werden.

Bevorzugt weist die Verladestation einen der ersten Steuervorrichtung zugeordneten Sensor, im Folgenden auch erster Sensor genannt, auf, der dazu eingerichtet ist, die Andock-Stellung des LKWs festzustellen. Dieser erste Sensor ist vorzugsweise ein optischer, mechanischer, induktiver, kapazitiver oder magnetischer Sensor.

Entsprechend ist in einer weiteren Ausführungsform die erste Steuervorrichtung dazu eingerichtet, die Laderampe in eine bei dem LKW aufliegende Andock-Stellung zu bringen und das erste Zugangstor zu öffnen, sobald die erste Kommunikationseinrichtung das Andock-Freigabesignal zum Bestätigen der Andock-Stellung des LKWs von der zweiten Kommunikationseinrichtung empfangen hat und der erste Sensor die Andock-Stellung des LKWs festgestellt hat. Die Fehleranfälligkeit des Systems wird durch die doppelte Bestätigung der korrekten Parkposition bzw. Andock-Stellung des LKWs über zwei voneinander unabhängige Informationskanäle deutlich verringert.

Vorzugsweise ist die zweite Steuervorrichtung dazu eingerichtet, die zweite Kommunikationseinrichtung zum Senden eines Abdock-Freigabesignals an die erste Kommunikationseinrichtung zu veranlassen, sobald eine Be-und/oder Entladung des LKWs abgeschlossen ist. Ein solches Abdock-Freigabesignal wird im Folgenden auch erstes Abdock-Freigabesignal genannt.

Entsprechend ist in einer weiteren Ausführungsform die erste Steuervorrichtung dazu eingerichtet, die Laderampe in eine von dem LKW beabstandete Abdock-Stellung zu bringen und das erste Zugangstor zu schließen, sobald die erste Kommunikationseinrichtung das erste Abdock-Freigabesignal zum Bestätigen der Abdock-Stellung des LKWs von der zweiten Kommunikationseinrichtung empfangen hat.

Bevorzugt ist die erste Steuervorrichtung dazu eingerichtet, die erste Kommunikationseinrichtung zum Senden eines Abdock-Freigabesignals zum Bestätigen einer Abdock-Stellung der Laderampe an die zweite Kommunikationseinrichtung zu veranlassen, sobald sich die Laderampe in einer vom LKW beabstandeten Abdock-Stellung befindet. Ein solches Abdock-Freigabesignal wird im Folgenden auch als zweites Abdock-Freigabesignal bezeichnet.

Entsprechend ist in einer weiteren Ausführungsform die zweite Steuervorrichtung dazu eingerichtet, das zweite Zugangstor zu schließen, die Wegfahrsperre zu deaktivieren und den LKW zum Abfahren zu veranlassen, wenn die zweite Kommunikationseinrichtung das zweite Abdock-Freigabesignal zum Bestätigen der Abdock-Stellung der Laderampe von der ersten Kommunikationseinrichtung empfangen hat.

In einer weiteren vorteilhaften Ausführungsform ist die zweite Steuervorrichtung dazu eingerichtet, nur dann das zweite Zugangstor zu schließen, die Wegfahrsperre zu deaktivieren und den LKW zum Abfahren zu veranlassen, wenn zusätzlich zum Empfang des zweiten Abdock-Freigabesignals zum Bestätigen einer Abdock-Stellung der Laderampe ein am Lastkraftwagen angebrachter Sensor, im Folgenden auch zweiter Sensor genannt, feststellt, dass sich die Laderampe in der vom Lastkraftwagen beabstandeten Abdock-Stellung befindet. Dieser zweite Sensor ist vorzugsweise ein optischer, mechanischer, induktiver, kapazitiver oder magnetischer Sensor. Auch diese doppelte Absicherung verringert die Fehleranfälligkeit des Systems deutlich.

Darüber hinaus sind weitere Ausführungsformen möglich, welche das Abdocken eines LKWs sicherer und/oder komfortabler machen. So kann beispielsweise die Feststellung einer vollständigen und/oder abgeschlossenen Be-und/oder Entladung durch eine Prüfung des Eigengewichts des LKWs und anschließendem Vergleich mit dem Soll-Gewicht des LKWs erfolgen. Weitere Parameter, wie Leergewicht und mögliche Restzuladung des LKWs, können in die Feststellung einfließen, ob ein Be- und/oder Entladevorgang vollständig und/oder abgeschlossen ist.

An dieser Stelle soll explizit darauf hingewiesen werden, dass alle beschriebenen Ausführungsformen zum System mit einigen oder allen Vorrichtungen und Einrichtungen die entsprechenden Verfahren miteinschließen.

So wird erfindungsgemäß auch ein Verfahren zur Überwachung und Steuerung von Andock- und Abdock-Vorgängen zwischen einer Verladestation und einem autonom oder teilautonom fahrenden LKW zur Verfügung gestellt. In einer möglichen Ausführungsform kann das Verfahren die folgenden Punkte enthalten:
- Veranlassen eines LKWs zum Anfahren einer Andock-Stellung an eine Verladestation, Aktivieren einer Wegfahrsperre des LKWs, Öffnen eines zum Laderaum des LKWs führendes zweiten Zugangstors und anschließendes Senden eines Andock-Freigabesignals zum Bestätigen der Andock-Stellung des LKWs durch eine zweite Kommunikationseinrichtung des LKWs an eine erste Kommunikationseinrichtung der Verladestation, wenn der LKW die Andock-Stellung erreicht hat.
- Empfangen des Andock-Freigabesignals zum Bestätigen der Andock-Stellung des LKWs durch die erste Kommunikationseinrichtung der Verladestation von der zweiten Kommunikationseinrichtung des LKWs, und anschließende Bewegung einer Laderampe der Verladestation in einen auf dem LKW aufliegende Andock-Stellung und Öffnen des ersten Zugangstors der Verladestation.
- Senden eines (zweiten) Abdock-Freigabesignals zum Bestätigen eines abgeschlossenen Be- und/oder Entladevorgangs durch die (zweite) Kommunikationseinrichtung des LKWs an die (erste) Kommunikationseinrichtung der Verladestation, wenn die Beendigung des Be- und/oder Entladevorgangs festgestellt wurde.
- Empfangen des (zweiten) Abdock-Freigabesignals zum Bestätigen des abgeschlossenen Be- und/oder Entladevorgangs durch die (erste) Kommunikationseinrichtung der Verladestation von der (zweiten) Kommunikationseinrichtung des LKWs, und anschließende Bewegung der Laderampe in eine vom LKW beabstandete Abdock-Stellung und Schließen des (ersten) Zugangstors der Verladestation.
- Senden eines ersten Abdock-Freigabesignals zum Bestätigen einer abgeschlossenen Be- und/oder Entladung des LKWs, sobald die Be- und/oder Entladung des LKWs abgeschlossen ist.
- Empfangen eines ersten Abdock-Freiagebsignals zum Bestätigen einer abgeschlossenen Be- und/oder Entladung des LKWs, und anschließendes Bewegen der Laderampe in eine von dem LKW beabstandete Abdock-Stellung und Schließen des Zugangstors.
- Senden eines zweiten Abdock-Freigabesignals zum Bestätigen der Abdock-Stellung der Laderampe durch die erste Kommunikationseinrichtung der Verladestation an die zweite Kommunikationseinrichtung des LKWs, sobald sich die Laderampe in der vom LKW beabstandeten Abdock-Stellung befindet.
- Empfangen des zweiten Abdock-Freigabesignals zum Bestätigen der Abdock-Stellung der Laderampe durch die zweite Kommunikationseinrichtung des LKWs von der ersten Kommunikationseinrichtung der Verladestation, und danach Schießen des zweiten Zugangstors und Deaktivieren der Wegfahrsperre, und anschließend Veranlassen des LKWs zum Abfahren von der Verladestation.

Selbstverständlich sind auch weitere Ausführungsformen des Verfahrens möglich, insbesondere eine Nutzung zusätzlicher Sensoren zur Feststellung verschiedener Andock- und Abdock-Stellungen der Verladestation und/oder des LKWs.

Bezüglich Kommunikationseinrichtungen ist eine Weiterleitung der aufgeführten Freigabesignale und weiterer Signale an ein LKW-Management-System vorteilhaft, durch welches beispielsweise ein Spediteur den Zustand und die Dauer der Be- oder Entladung in Echtzeit verfolgen kann.

Durch das Registrieren und Verfolgen der Verladevorgänge und des Ab- oder Andocken der LKW können Abläufe besser geplant und Routen und Wegzeiten genauer koordiniert werden.

Auch eine Erfassung aller Signale durch ein Management-System der Verladestation ist sinnvoll. Somit kann exakt festgehalten werden, welcher LKW an welche Andockstation fährt, wann ein Verladevorgang beginnt und endet, und welcher Spediteur den LKW fährt. Durch solche Systeme wird eine Archivierung wichtiger Daten möglich. Insbesondere für die Verfolgung und Nachforschung bei eventuell auftretenden Hygiene-Problemen können Ursachen aufgefunden und daraus Maßnahmen abgeleitet werden. Durch die steigenden Hygiene-Standards gewinnt die längerfristige Archivierung solcher Informationen zunehmend an Bedeutung.

### Kurzbeschreibung der Zeichnungen

Nachfolgend werden Ausführungsbeispiele der erfindungsgemäßen Lösung anhand der beigefügten schematischen Zeichnungen näher erläutert. Es zeigen:
- Fig. 1: eine Seitenansicht eines Ausführungsbeispiels eines erfindungsgemäßen Systems mit zugehöriger Verladestation und einem LKW.
- Fig. 2: eine Seitenansicht eines weiteren Ausführungsbeispiels eines erfindungsgemäßen Systems mit zugehöriger Verladestation und einem LKW, erweitert durch einen Sensor der Verladestation,
- Fig. 3: eine Seitenansicht eines weiteren Ausführungsbeispiels eines erfindungsgemäßen Systems mit zugehöriger Verladestation und einem LKW, erweitert durch einen Sensor des LKWs, und
- Fig. 4: eine extrahierte Darstellung zur bidirektionalen Kommunikation zwischen Verladestation und LKW.

### Detaillierte Beschreibung der Ausführungsbeispiele

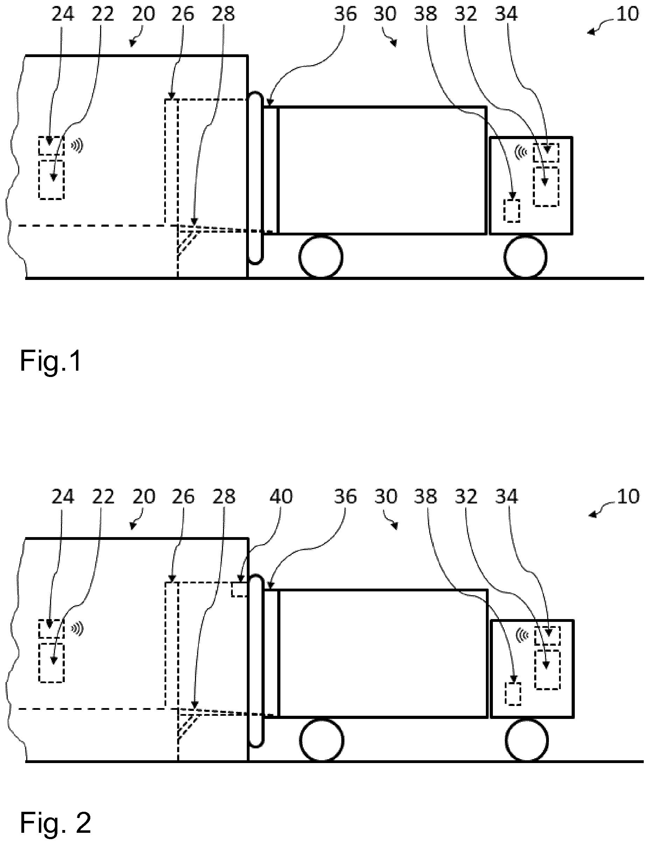

Fig.1 zeigt ein System 10 mit einer Verladestation 20 und einem autonom oder teilautonom fahrenden LKW 30, der mittels einer beweglichen, insbesondere klappbaren Laderampe 28 mit der Verladestation 20 verbunden ist. Die Laderampe 28 dieser Bauweise wird auch als Überladebrücke bezeichnet. Der LKW 30 kann in einer Andock-Stellung die Außenwand der Verladestation 20 berühren. Dazu ist diese Andock- bzw. Anstoß-Stelle insbesondere vorzugsweise mit Rammpuffern ausgestattet. Aufgrund des direkten Kontakts von LKW 30 und Verladestation 20 kann ein Eindringen in den zugehörigen Laderaum des LKWs 30, beispielsweise durch unberechtigte Personen, unterbunden werden.

Die Verladestation 20 beinhaltet neben der Laderampe 28 auch ein Zugangstor 26, sowie eine Steuervorrichtung 22 mit einer zugehörigen Kommunikationsvorrichtung 24 zum Senden und Empfangen von Freigabesignalen. Das Zugangstor 26 wird hier als erstes Zugangstor, und die Steuervorrichtung 22 als erste Steuervorrichtung bezeichnet. Der LKW 30 beinhaltet ein Zugangstor 36, eine Steuervorrichtung 32 mit einer zugehörigen Kommunikationsvorrichtung 34, sowie einer Wegfahrsperre 38. Das Zugangstor 36 wird hier als zweites Zugangstor, und die Steuervorrichtung 32 als zweite Steuervorrichtung bezeichnet.

Die Steuervorrichtung 22 der Verladestation 20 steuert die Position der Laderampe 28 und das Öffnen und Schließen des Zugangstors 26. Außerdem veranlasst die Steuervorrichtung 22 die Kommunikationseinrichtung 24 zum Senden von Freigabesignalen. Die Kommunikationseinrichtung 24 wird hier als erste Kommunikationseinrichtung bezeichnet. Die Steuervorrichtung 32 des LKWs 30 steuert einen (nicht im Detail dargestellten) Fahrantrieb des LKWs 30, das Zugangstor 36 zum Laderaum des LKWs und die Wegfahrsperre 38. Außerdem veranlasst die Steuervorrichtung 32 die Kommunikationseinrichtung 34 zum Senden von Freigabesignalen. Die Kommunikationseinrichtung 34 wird hier als zweite Kommunikationseinrichtung bezeichnet.

Die beiden Kommunikationseinrichtungen 24 und 34 sind in der Lage bidirektional miteinander zu kommunizieren und jeweils Freigabesignale zum Andocken und Abdocken zu senden und zu empfangen.

Der Steuervorrichtung 22 der Verladestation ist eine Kommunikationseinrichtung 24 zugeordnet, welche drahtlos mit einer der Steuervorrichtung 32 des LKWs 30 zugeordneten Kommunikationseinrichtung 34 kommuniziert. Die beiden Kommunikationseinrichtungen 24, 34 sind dazu eingerichtet, Freigabesignale für das Andocken und Abdocken des LKWs 30 zu senden und zu empfangen.

Ein Vorteil ist dabei, dass die beiden Steuervorrichtungen 22 und 32 bidirektional miteinander kommunizieren und sich dabei gegenseitig absichern bzw. rückversichern können.

Fig.2 zeigt das System 10 aus Fig.1, erweitert durch einen Sensor 40 der Verladestation 20. Der Sensor 40 ist vorzugsweise als ein optischer, mechanischer, induktiver, kapazitiver oder magnetischer Sensor gestaltet. Der Sensor 40 kann dabei feststellen, ob der LKW 30 die für das Andocken vorgesehene Parkposition, also die korrekte Andock-Stellung erreicht hat.

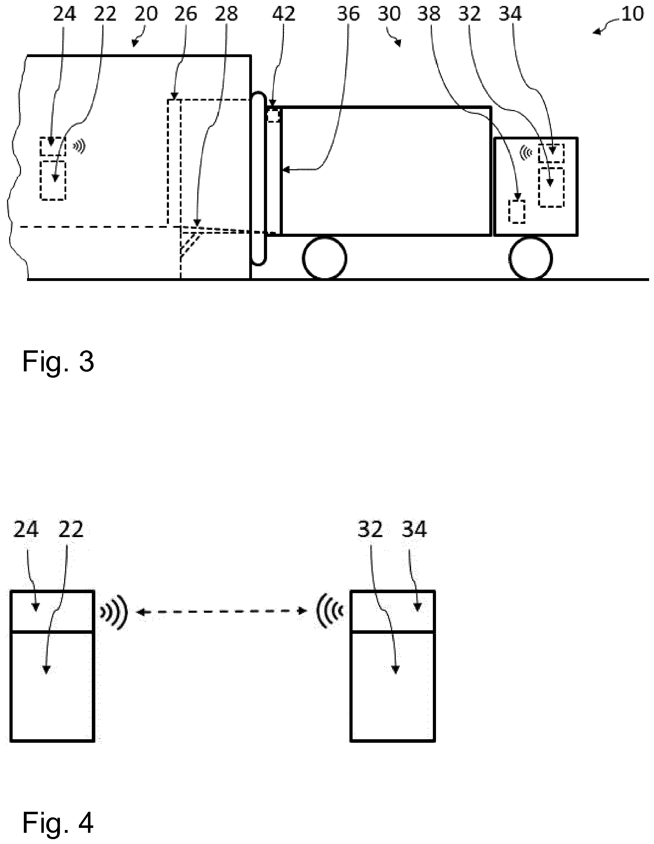

Fig.3 zeigt das System 10 aus Fig.1, erweitert durch einen Sensor 42 des LKWs 30. Der Sensor 42 ist bevorzugt ebenfalls als ein optischer, mechanischer, induktiver, kapazitiver oder magnetischer Sensor gestaltet. Der Sensor 42 kann feststellen, ob die Laderampe 28 vom LKW 30 beabstandet ist.

Fig.4 zeigt eine vereinfachte Darstellung der bidirektionalen Kommunikation zwischen der durch die erste Steuervorrichtung 22 gesteuerten Kommunikationseinrichtung 24 der Verladestation 20 und der durch die Steuervorrichtung 32 gesteuerte Kommunikationsvorrichtung 34 des LKWs. Der Empfang eines Andock- oder Abdock-Freigabesignals durch eine der Kommunikationseinrichtungen 24, 34 beeinflusst die Steuerung einzelner oder mehrerer zugehöriger Komponenten der Verladestation 20 oder des LKWs 30.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: System
- 20: Verladestation
- 22: erste Steuervorrichtung
- 24: erste Kommunikationsvorrichtung
- 26: erstes Zugangstor
- 28: Laderampe der Verladestation
- 30: LKW
- 32: zweite Steuervorrichtung
- 34: zweite Kommunikationsvorrichtung
- 36: zweites Zugangstor
- 38: Wegfahrsperre
- 40: Sensor der Verladestation
- 42: Sensor des LKWs

## Patentansprüche

1. System (10) zur Überwachung und Steuerung von Andock- und Abdock-Vorgängen zwischen einer Verladestation (20) und einem autonom oder teilautonom fahrenden LKW (30) mit:
- einer der Verladestation (20) zugeordneten ersten Steuervorrichtung (22) zum Steuern eines ersten Zugangstors (26) und einer Laderampe (28) der Verladestation (20),
- einer an Bord des LKWs (30) angeordneten zweiten Steuervorrichtung (32) zur Steuerung eines Fahrantriebs, eines zweiten Zugangstors (36) und einer Wegfahrsperre (38) des LKWs (30).
- einer der ersten Steuervorrichtung (22) zugeordneten ersten Kommunikationseinrichtung (24) zur drahtlosen Kommunikation mit einer der zweiten Steuervorrichtung (32) zugeordneten zweiten Kommunikationseinrichtung (34), wobei die beiden Kommunikationseinrichtungen (24, 34) dazu eingerichtet sind, Freigabesignale zum Bestätigen einer Andock- oder Abdock-Stellung des LKWs (30) und der Verladestation (20) zu senden und zu empfangen.

2. System (10) nach Anspruch 1,
**dadurch gekennzeichnet, dass** die zweite Steuervorrichtung (32) dazu eingerichtet ist, den LKW (30) zum Anfahren einer Andock-Stellung an der Verladestation (20) zu veranlassen, danach die Wegfahrsperre (38) zu aktivieren und das zweite Zugangstor (36) zu öffnen, und die zweite Kommunikationseinrichtung (34) zum Senden eines Andock-Freigabesignals zum Bestätigen einer Andock-Stellung des LKWs (30) an die erste Kommunikationseinrichtung (24) zu veranlassen, wenn der LKW (30) die Andock-Stellung erreicht hat.

3. System (10) nach Anspruch 2,
**dadurch gekennzeichnet, dass** die erste Steuervorrichtung (22) dazu eingerichtet ist, die Laderampe (28) in eine auf dem LKW (30) aufliegende Andock-Stellung zu bringen und das erste Zugangstor (26) zu öffnen, sobald die erste Kommunikationseinrichtung (24) das Andock-Freigabesignal zum Bestätigen der Andock-Stellung des LKWs (30) von der zweiten Kommunikationseinrichtung (34) empfangen hat.

4. System (10) nach einem der Ansprüche 2 und 3,
**dadurch gekennzeichnet, dass** die Verladestation (20) einen der ersten Steuervorrichtung (22) zugeordneten ersten Sensor (40) aufweist, der dazu eingerichtet ist, die Andock-Stellung des LKWs (30) festzustellen, wobei der erste Sensor (40) vorzugsweise ein optischer, mechanischer, induktiver, kapazitiver oder magnetischer Sensor ist.

5. System (10) nach Anspruch 4,
**dadurch gekennzeichnet, dass** die erste Steuervorrichtung (32) dazu eingerichtet ist, die Laderampe (28) in eine auf dem LKW (30) aufliegende Andock-Stellung zu bringen und anschließend das erste Zugangstor (26) zu öffnen, sobald die erste Kommunikationseinrichtung (24) das Andock-Freigabesignal zum Bestätigen der Andock-Stellung des LKWs (30) von der zweiten Kommunikationseinrichtung (34) empfangen hat und der erste Sensor (40) die Andock-Stellung des LKWs (30) festgestellt hat.

6. System (10) nach einem der vorhergehenden Ansprüche,
**dadurch gekennzeichnet, dass** die zweite Steuervorrichtung (32) dazu eingerichtet ist, die zweite Kommunikationseinrichtung (34) zum Senden eines ersten Abdock-Freigabesignals an die erste Kommunikationseinrichtung (24) zu veranlassen, sobald eine Be-und/oder Entladung des LKWs abgeschlossen ist.

7. System (10) nach Anspruch 6,
**dadurch gekennzeichnet, dass** die erste Steuervorrichtung (22) dazu eingerichtet ist, die Laderampe (28) in eine von dem LKW (30) beabstandete Abdock-Stellung zu bringen und das erste Zugangstor (26) zu schließen, sobald die erste Kommunikationseinrichtung (24) das erste Abdock-Freigabesignal zum Bestätigen der abgeschlossenen Be- und/oder Entladung des LKWs (30) von der zweiten Kommunikationseinrichtung (34) empfangen hat.

8. System (10) nach einem der vorhergehenden Ansprüche,
**dadurch gekennzeichnet, dass** die erste Steuervorrichtung (22) dazu eingerichtet ist, die erste Kommunikationseinrichtung (24) zum Senden eines zweiten Abdock-Freigabesignals zum Bestätigen einer Abdock-Stellung der Laderampe (28) an die zweite Kommunikationseinrichtung (34) zu veranlassen, sobald sich die Laderampe (28) in einer vom LKW (30) beabstandeten Abdock-Stellung befindet.

9. System (10) nach Anspruch 8,
**dadurch gekennzeichnet, dass** die zweite Steuervorrichtung (32) dazu eingerichtet ist, das zweite Zugangstor (36) zu schließen, und die Wegfahrsperre (38) zu deaktivieren und den LKW (30) zum Abfahren von der Verladestation (20) zu veranlassen, wenn die zweite Kommunikationseinrichtung (34) das zweite Abdock-Freigabesignal zum Bestätigen der Abdock-Stellung der Laderampe (28) von der ersten Kommunikationseinrichtung (24) empfangen hat.

10. System (10) nach Anspruch 8 und 9,
**dadurch gekennzeichnet, dass** die zweite Steuervorrichtung (32) dazu eingerichtet ist, das zweite Zugangstor (36) zu schließen, die Wegfahrsperre (38) zu deaktivieren und den LKW (30) zum Abfahren zu veranlassen, wenn zusätzlich zum Empfang des zweiten Abdock-Freigabesignal zum Bestätigen einer Abdock-Stellung der Laderampe (28) ein am Lastkraftwagen (30) angebrachter Sensor (42) feststellt, dass sich die Laderampe (28) in der vom Lastkraftwagen (30) beabstandeten Abdock-Stellung befindet, wobei der Sensor (42) vorzugsweise ein optischer, mechanischer, induktiver, kapazitiver oder magnetischer Sensor ist.
